# EUROPEAN PATENT APPLICATION

(11) **EP 1 798 660 A2**
(43) Date of publication of application: **20.06.2007**
(21) Application number: 07004576.0
(22) Date of filing: 29.08.2003
(51) Int. Cl.: G06K 7/00

(54) **Method of reading a plurality of non-contact data carriers, including an anti-collision scheme**

(30) Priority: 11.09.2002 EP 02102343
(62) Divisional of application: 03795162.1
(71) Applicant: Koninklijke Philips Electronics N.V., 5621 BA Eindhoven (NL)
(72) Inventor: Breitfuss, Klemens, 8101 Gratkorn (AT); Thueringer, Peter, 8101 Graz (AT)
(74) Representative: Röggla, Harald

(57) **Abstract**

A method of inventorying data carriers (DC-A, DC-B), which method comprises the following steps: choosing from a plurality of transmission start moments in reference to a start point in time (0, t4) a transmission start moment for starting a transmission of a carrier signal (RF) for the purpose of supplying data (ID) to the communication station (STATION) during a transmission of said carrier signal (RF), and testing whether another data carrier (DC-A, DC-B) is already transmitting a carrier signal (RF) after said start point in time (0, t4) and prior to said chosen transmission start moment, and inhibiting the starting of said transmission of said carrier signal (RF) at said chosen transmission start moment if the result of said testing is positive.

## Description

### FIELD OF THE INVENTION

The invention relates to a method of inventorying data carriers.

### BACKGROUND OF THE INVENTION

A method as described in the first paragraph is known from the document EP 0 957 442 B. This known document discloses a method of inventorying data carriers by means of a communication station, which method is often denoted an anticollision method or anticollision procedure. The communication station, often denoted the reader station, and the known data carrier are brought into communicative connection such that the communication station sends an inquiry information to all data carriers present in a communication field. The sufficient energy supply of the data carriers present in the communication field and the faultless reception of the inquiry information in each data carrier each constitute an operational condition which is to be fulfilled before each respective data carrier generates a response signal which renders possible the inventorying of the relevant data carrier. The inquiry information initializes the start of a sequence of N consecutive time windows both in the reader station and in the data carriers. Each of the N time windows has a given time window duration, which may be fixed or variable. Several sequences of N consecutive time windows are usually generated in a complete anticollision procedure.

Each of the known data carriers comprises a random number generator which randomly lays down one of the N time windows as the return transmission time window, whereby a random transmission start moment is given. The data carrier sends a response information or response signal in the return transmission time window selected by the respective data carrier, which response signal contains the serial number of the data carrier and thus unequivocally characterizes the data carrier. The reader station sends a time window switching information at the end of each time window, such that a switch-over is made from the present time window to the next time window. The reader station identifies the data carriers one after the other and can subsequently, following the completion of the anticollision method, build up and implement a direct communication with one of the data carriers in the communication field each time.

The known solution involves the disadvantage that the entire transaction time for inventorying the known data carriers is comparatively long, because all time windows always have to be worked through.

### OBJECT AND SUMMARY OF THE INVENTION

The invention has for its object to eliminate the above disadvantage and to provide an improved method.

To achieve the above object, inventive features are provided in a method according to the invention such that a method according to the invention can be characterized as follows:

A method of inventorying data carriers, which method comprises the following steps: choosing from a plurality of transmission start moments in reference to a start point in time a transmission start moment for starting a transmission of a carrier signal for the purpose of supplying data to the communication station during a transmission of said carrier signal, wherein the data enable the inventory of the data carrier, and testing whether another data carrier is already transmitting a carrier signal after said start point in time and prior to said chosen transmission start moment, and inhibiting the starting of said transmission of said carrier signal at said chosen transmission start moment if the result of said testing is positive.

The provision of the inventive features advantageously and in a simple manner achieves that data carriers can be inventoried significantly faster. This is achieved in particular in that a data carrier, which is brought into communicative connection with the communication station, reacts to other data carriers which are also brought into communicative connection with the communication station, i.e. said data carrier tests whether one of the other data carriers is already giving a response signal, such that the former data carrier will only give its response signal if no other data carrier is already giving a response signal at its transmission start moment.

According to a further aspect of the invention the measures of claim 2 are provided. The inventive features further advantageously achieve that, for example with a small number of data carriers which are brought into communicative connection with a communication station, a response signal can be obtained within a shortest possible period of time with a comparatively high probability, which is desirable and highly advantageous in many applications.

According to a further aspect of the invention the measures of claim 3 are provided, which provides the advantage that transient phenomenon are taken into account..

The measures of claim 4 provide the advantage that a transmission start moment can be determined in a comparatively simple manner.

The measures of claim 5 provide the advantage that frequent collisions caused by identical transmission start moments of the data carriers are avoided.

The measures of claim 6 provide the advantage that a starting point in time of a waiting time is exactly defined.

According to another aspect of the invention the measures of claim 7 are provided, which provides the advantage that the waiting tme is exactly defined.

Furthermore, the measures of claim 8 advantageously achieve that an already inventoried data carrier does not take part any more in the inventorying process during inventorying of further data carriers, which is very advantageous for making the inventorying as fast as possible.

The above and further aspects of the invention will become apparent from the ensuing description of an embodiment and are clarified with reference to this embodiment.

### BRIEF DESCRIPTION OF THE DRAWINGS

The invention will be explained in more detail below with reference to an embodiment shown in the drawing to which, however, the invention is not limited.

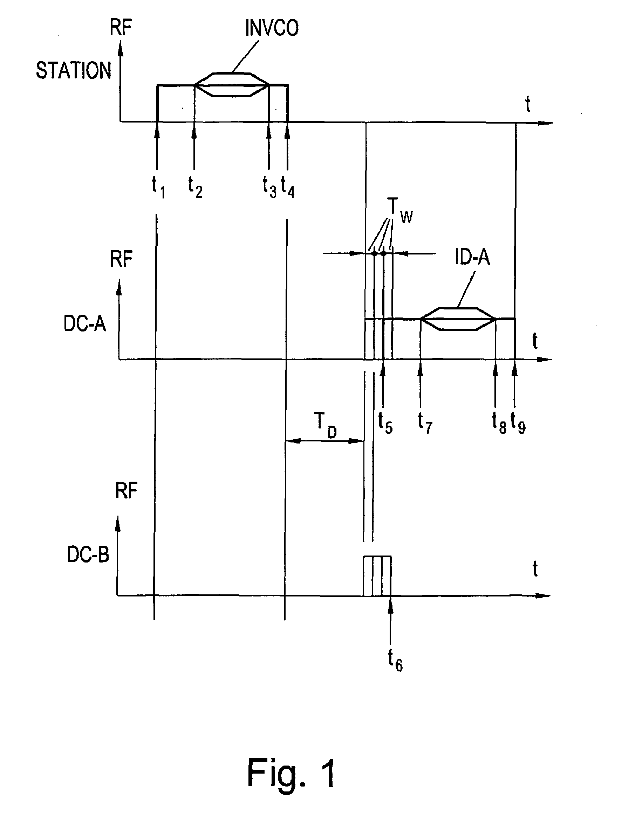

Fig. 1 is a time diagram of the commands and signals occurring during an inventorying procedure, in which the method according to the invention is applied.

### DESCRIPTION OF EMBODIMENTS

In the following a method of inventorying devices is described by means of the time diagram shown in Figure 1. In the shown scenario a so-called communication station STATION and two data carriers DC-A and DC-B are involved. However, it is to note that the number of data carriers involved is not a limiting measure. For the purpose of inventorying the data carriers DC-A and DC-B comprise storage means having a memory location in which identification data ID significant and unique to each of the data carriers DC-A and DC-B are stored.

Figures 1 shows for each of the devices STATION, DC-A and DC-B involved a time line t associated with the horizontal axis and the status of its carrier signal RF or high-frequency filed associated with the vertical axis. As shown in Figure 1 the status can be switched on, e.g. between t1 and t4 for the communication station STATION or between t5 and t9 for the data carrier DC-A. The status can further be switched off, e.g. between the origin of the time line t and t1 or after t4 in case of the communication station STATION; between the origin of the time line t and t5 or after t9 in case of the data carrier DC-A; along the entire shown time line t in case of the data carrier DC-B.

The data carriers DC-A and DC-B are able to actively produce and send out a carrier signal RF, as shown in Figure 1 between time slot t1 to t4 and time slot t5 to t9. Such data carriers DC-A and DC-B comprise and internal oscillator independent of signals supplied to the data carriers DC-A and DC-B by an external source. By means of the internal oscillator a clock signal can be generated. Such an internal oscillator is advantageous especially if the communication between a communication station STATION and the data carrier DC-A or DC-B takes place at a very high operating frequency, for example at the operating frequency in the so-called UHF range or the microwave range.

It is necessary to carry out a so-called inventorying of the plurality of data carriers DC-A and DC-B by means of the communication station STATION, which communicates in a contact-less manner with the data carriers DC-A and DC-B. During such an inventorying process, identification data ID significant for the respective data carrier DC-A or DC-B are transmitted by the respective data carrier DC-A or DC-B to the communication station STATION and stored in the communication station STATION, i.e. for each data carrier DC-A and DC-B, so that the identification data ID of all data carriers DC-A and DC-B in communicative connection with the communication station STATION are known in the communication station STATION, which renders it possible for the communication station STATION to come into contact with a respective data carrier DC-A or DC-B in a purpose-oriented and non-interchangeable manner through the use of the identification data ID characteristic of this data carrier DC-A or DC-B, for example for reading useful data from the relevant data carrier DC-A or DC-B or storing useful data in the relevant data carrier DC-A or DC-B. It is to be noted that identification data ID are not determined for all data carriers DC-A and DC-B that can be brought into communicative connection with the communication station STATION, but that the identification data ID of a data carrier DC-A or DC-B responding first will suffice.

Figure 1 shows the time sequences of communication signals of both the communication station STATION and the data carrier DC-A.

It is assumed that a total of two (2) data carriers, DC-A and DC-B, and one communication station STATION are present in a common communication area at the start of the method of inventorying the data carriers DC-A and DC-B. At this start of the method of inventorying the data carriers DC-A and DC-B, the communication station STATION generates the inventory command INVCO in accordance with a defined transmission protocol and transmits it to all data carriers DC-A and DC-B. It starts at a moment t1 by transmitting a high-frequency field or a carrier signal RF, and from a moment t2 up to a moment t3 the inventory command INVCO is sent. The high-frequency field is maintained until a moment t4. During the period from moment t2 to moment t3, the inventory command INVCO is received in the data carriers DC-A and DC-B.

At moment t4, i.e. after the recognition of the inventory command INVCO in both data carriers DC-A and DC-B, a transmission start moment t5 and t6 respectively is determined for each of them. As is apparent from the time diagram of the data carrier DC-A, the transmission start moment t5 was chosen by the data carrier DC-A while the transmission start moment t6 was chosen by the data carrier DC-B. The transmission start moments in the present case result from the sum of a selectable discrete delay period T_{D} and a number of waiting time periods T_{W}, starting from the moment t4, which forms the origin of the time scale for choosing the transmission start moment t5 for the data carrier DC-A and t6 for the data carrier DC-B. The number of waiting periods T_{W} is determined by a random principle. It is possible in the present case to choose up to a number of three (3) waiting periods T_{W}, two (2) waiting periods T_{W} being chosen for the data carrier DC-A. It is to be noted that the number of waiting periods T_{W} may vary widely in dependence on the application, such that advantageously the maximum number of selectable waiting periods T_{W} is double the maximum number of data carriers present in a common communication range with a communication station STATION, so as to avoid frequent collisions.

As is apparent from the time diagram for the data carrier DC-B, the transmission start moment t6 was chosen, which transmission start moment t6 is one waiting period T_{W} later than the transmission start moment t5.

After the transmission start moment has been determined, it is determined or detected by the data carrier DC-A at moment t5 whether a further data carrier present in the common communication range, i.e. in the present case the data carrier DC-B, is already sending a response signal. If no response signal is determined or detected a response signal generated and send out as shown in Figure 1 along the time line of device DC-A. For this purpose the identification data ID are read from the memory location of the storage means. The identification signal IDS is generated from the identification data ID and additional data, such as security data. It should be noted here already - with regard to the internal structure of the data carrier - that identification signal generation means for generating the identification signal IDS at the same time form response signal generation means by which a response signal can be generated, which in the present case is also generated from the identification data ID and is formed by the identification signal IDS, which need not necessarily be the case, because the response signal may differ from the identification signal IDS. The identification signal IDS generated by the identification signal generation means must be transmitted from the data carrier DC-A or DC-B to the communication station STATION for the purpose of inventorying.

In the corresponding time diagram in Fig. 1, the delivery of the identification signal IDS-A takes place between a moment t7 and a moment t8, while transient phenomena are taken into account before the moment t7 and after the moment t8 up to a moment t9. It is to be noted that these transient phenomena may vary strongly from system to system and may even be absent

It is determined or detected in the data carrier DC-B at moment t6 whether a further data carrier present in the common communication range, i.e. the data carrier DC-A in the present case, is sending a response signal. In this case the response signal given by the data carrier DC-A is recognized or detected in that a generated carrier signal RF occurring along with the provided response signal is recognized. The data carrier DC-B generates internally a response signal recognition signal ASDS in this case, because the data carrier DC-A is already giving its response signal at moment t6, which response signal recognition signal ASDS achieves that no identification signal IDS-B will be supplied for transmission and no carrier signal RF will be send out.

It is thus advantageously achieved in the method described above that a data carrier, i.e. the data carrier DC-A in this case, has been inventoried or selected by a communication station STATION in as short a time as possible. This is advantageous, for example, if a communication station STATION is to start a service the moment at least one data carrier enters the communication range of the communication station. Such a service may be, for example, an advertising action or something similar.

If so desired, the data carrier DC-B may now be inventoried, for which purpose the communication station STATION once more sends an inventory command INVCO, and the data carrier DC-B is inventoried in accordance with the method described above, which is not shown in Figure 1. Advantageously, the data carrier DC-A is set to an idle state before the communication station provides the inventory command INVCO, in which idle state the data carrier DC-A does not react any more to the inventory command INVCO.

If the same transmission start moment is determined in both data carriers DC-A and DC-B, and accordingly a response signal RF is transmitted at the same time, the communication station STATION is constructed for recognizing several response signals RF and for interrupting the inventory, and possibly restarting the inventory by means of a renewed delivery or transmission of the inventory command INVCO.

It is to be noted that the communication station STATION may at the same time be formed by a data carrier DC-A or DC-B, in which case such a data carrier DC-A or DC-B has the same means for communicating with other data carriers DC-A or DC-B as a communication station STATION.

It may furthermore be noted that a method according to the invention may be implemented among a plurality of communication stations STATION.

## Claims

1. A method of inventorying data carriers (DC-A, DC-B), which method comprises the following steps:
choosing from a plurality of transmission start moments (t5, t6) in reference to a start point in time (t4) a transmission start moment (t5) for starting a transmission of a carrier signal (RF) for the purpose of supplying data (ID) to a communication station (STATION) during the transmission of said carrier signal (RF), wherein the data (ID) enable the inventory of the data carrier (DC-A, DC-B), and
testing whether another data carrier (DC-A, DC-B) is already transmitting a carrier signal (RF) after said start point in time (t4) and prior to said chosen transmission start moment (t5), and
inhibiting the starting of said transmission of said carrier signal (RF) at said chosen transmission start moment (t5) if the result of said testing is positive.

2. A method as claimed in claim 1, comprising
starting the transmission of said carrier signal (RF) at the chosen transmission start moment (t5) if said result of said testing is negative.

3. A method as claimed in claim 2, comprising
maintaining during the carrier signal (RF) transmission a data free pre-data supply period in time before the supply of data (ID) takes place and
maintaining during said carrier signal (RF) transmission a data free post-data supply period in time after the supply of data (ID) took place until the end of the carrier signal (RF) transmission.

4. A method as claimed in claim 1, wherein
the transmission start moment is selected by a random principle.

5. A method as claimed in claim 1, wherein
said choosing of said transmission start moment allows the number of choose-able transmission start moments to be greater than the number of data carriers (DC-A, DC-B).

6. A method as claimed in claim 1, wherein
said choosing of the transmission start moment is performed in such a way that said start point (t4) in time is defined as the end of a carrier signal (RF) transmission of the communication station (STATION), the communication station (STATION) supplied its data representing an inventory command (INVCO) during its carrier signal (RF) transmission.

7. A method as claimed in claim 6, wherein
said choosing of the transmission start moment comprises shifting said transmission start moment in time by a selectable discrete delay period (TD) with respect to said end of the carrier signal (RF) transmission of the said communication station (STATION).

8. A method as claimed in claim 2, comprising
setting said data carrier (DC-A, DC-B) that has supplied its data as identification data (ID) into an idle state by the communication station (STATION), in which idle state no carrier signal (RF) is transmitted.
